# EUROPÄISCHE PATENTSCHRIFT

(11) **EP 0 828 447 B1**
(45) Veröffentlichungstag und Bekanntmachung des Hinweises auf die Patenterteilung: **17.03.1999**
(21) Anmeldenummer: 96914211.6
(22) Anmeldetag: 15.05.1996
(51) Int. Cl.: A47G 25/32

(54) **KLEIDERBÜGEL, INSBESONDERE ZUM AUFHÄNGEN VON KLEIDUNGSSTÜCKEN AN DEN HALTEGRIFFEN IM INNENRAUM EINES PKW**
CLOTHES HANGER, IN PARTICULAR FOR HANGING ARTICLES OF CLOTHING FROM THE GRAB HANDLES INSIDE PASSENGER CARS
CINTRE, NOTAMMENT POUR SUSPENDRE DES VETEMENTS AUX POIGNEES DE MAINTIEN DANS L'HABITACLE D'UNE VOITURE PARTICULIERE

(30) Priorität: 18.05.1995 DE 29508276 U; 05.12.1995 DE 29519287 U
(43) Veröffentlichungstag der Anmeldung: 18.03.1998
(73) Patentinhaber: MAWA METALLWARENFABRIK WAGNER GMBH, D-85276 Pfaffenhofen (DE)
(72) Erfinder: BARLOW, Christopher Paul, D-85057 Ingolstadt (DE); KRÖNAUER, Karlhans, D-85304 Ilmmünster (DE); AIGNER, Josef, D-85283 Gosseltshausen (DE)
(74) Vertreter: Abitz, Walter, Dr.-Ing.
(86) Internationale Anmeldenummer: EP9602075
(87) Internationale Veröffentlichungsnummer: WO9636262

(56) Entgegenhaltungen:
- GB-A- 1 155 816
- US-A- 2 046 654
- US-A- 2 877 940

## Beschreibung

Die Erfindung betrifft einen Kleiderbügel, der sich insbesondere zum Aufhängen von Kleidungsstücken an den Haltegriffen im Innenraum eines PKW eignet. Der Kleiderbügel weist einen Bügelkörper mit zwei Tragarmen auf, sowie einen Aufhängehaken, der in der Mitte des Bügelkörpers nach oben absteht, und ein nachgiebiges Sicherungselement, das sich in der Öffnung des Aufhängehakens befindet, so daß es die Öffnung des Aufhängehakens verkleinert, und das entgegen einer Federkraft so verlagerbar ist, daß es die Öffnung des Aufhängehakens freigibt.

Um in einem PKW eine Möglichkeit zum Aufhängen eines Kleidungsstückes, z.B. eines Jacketts, auf einem Kleiderbügel zu haben, ist es bekannt, an den im PKW-Innenraum vorhandenen Haltegriffen spezielle Garderobehaken vorzusehen, an denen der Aufhängehaken des Kleiderbügels eingehängt werden kann. Bisweilen wird der Aufhängehaken des Kleiderbügels auch an dem Handgriff selbst eingehängt. In jedem Fall handelt es sich hierbei um eine punktförmige Aufhängung, so daß das Kleidungsstück auf dem Bügelkörper beim Beschleunigen und Abbremsen des PKW hin- und herschaukelt und -rutscht. Außerdem besteht die Gefahr, daß der Kleiderbügel sich bei Erschütterungen durch Fahrbahnunebenheiten von dem Haltegriff löst. Wird das Sakko mittels der eingenähten Halteschlaufe unmittelbar an dem Garderobehaken aufgehängt, so beeinträchtigt dies die Paßform des Sakkos.

Aus FR-PS 1.400.597 und US-PS 2,483,618 sind Kleiderbügel bekannt, bei denen die Aufhängehaken mit einem Sicherungselement wie bei einem Karabinerhaken versehen sind.

Aus DE-GM 1 870 146 ist ein Aufhängehaken für Kleiderbügel bekannt, der aus zwei mit seitlichem Abstand voneinander aber miteinander verbundenen Einzelhaken besteht. Dadurch soll insbesondere bei der Verwendung des Kleiderbügels in Fahrzeugen der Kleiderbügel gegen Dreh-, Längs- und Querbewegungen gesichert werden. Die Umrißform der Einzelhaken ist dabei ein auf der Diagonale stehendes Quadrat mit einer offenen Seite, so daß der Aufhängehaken an vier Punkten auf der Garderobenstange aufliegt.

Ein Aufhängehaken aus zwei mit seitlichem Abstand voneinander aber miteinander verbundenen Einzelhaken ist ferner aus US-PS 2,494,973 bekannt. Durch diesen Aufhängehaken wird eine Zweipunktaufhängung erzielt.

Der Erfindung liegt die Aufgabe zugrunde, einen Kleiderbügel zu schaffen, der während der Fahrt sicher am Haltegriff im Innenraum des PKW sitzt. Die Handhabung des Kleiderbügels soll dabei besonders einfach sein.

Erfindungsgemäß wird diese Aufgabe dadurch gelöst, daß die beiden Tragarme jeweils aus im Abstand parallel zueinander verlaufenden ersten und zweiten Drahtstücken gebildet sind, wobei die äußeren Enden der ersten und zweiten Drahtstücke miteinander verbunden sind, daß an den inneren Enden des jeweils ersten Drahtstückes der Aufhängehaken angeordnet ist und daß das nachgiebige Sicherungselement durch ein weiteres Drahtstück gebildet wird, das die inneren Enden der jeweils zweiten Drahtstücke miteinander verbindet.

Dadurch, daß das nachgiebige Sicherungselement entgegen einer Federkraft verlagerbar ist, nimmt es nach dem Aufhängen des Kleiderbügels wieder seine ursprüngliche Lage ein, in der es die Öffnung des Aufhängehakens wieder so weit verschließt, daß ein unbeabsichtigtes Lösen des Kleiderbügels von dem Haltegriff verhindert wird.

Der Aufhängehaken hat vorzugsweise eine Breite von ca. 6 cm oder ist ein Doppelhaken aus zwei Hakenelementen, die in diesem Abstand verlaufen. Die beiden freien Enden der Hakenelemente sind durch ein Verbindungselement verbunden. Durch die besondere Breite des Aufhängehakens wird erreicht, daß sich der Kleiderbügel nur noch geringfügig auf dem Haltegriff in Längsrichtung verschieben kann. Außerdem liegt der Aufhängehaken dadurch mit seinen seitlichen Rändern bzw. mit den beiden Hakenelementen auf dem Haltegriff auf, wodurch ein Hin- und Herschaukeln des Kleiderbügels während der Fahrt weitgehend unterdrückt wird.

Das Hin- und Herschaukeln des Kleiderbügels kann dadurch weiter vermindert werden, daß der Aufhängehaken mit einer weichen Beschichtung versehen wird, z.B. einer rutschhemmenden Beschichtung, wie sie für Metall-Kleiderbügel bekannt ist.

Vorzugsweise ist der Kleiderbügel aus Draht gebogen, wobei die beiden Tragarme jeweils aus zwei parallel verlaufenden Drahtstücken, die an ihren äußeren Enden über eine U-förmige Umbiegung miteinander verbunden sind, gebildet werden, an den inneren Enden des jeweils einen Drahtstückes eines der beiden Hakenelemente angeformt ist, die inneren Enden des jeweils anderen Drahtstückes durch ein weiteres Drahtstück miteinander verbunden sind, das das nachgiebige Sicherungselement darstellt, und die Hakenelemente und das nachgiebige Sicherungselement so ausgebildet sind, daß sich das nachgiebige Sicherungselement innerhalb des Aufhängehakens befindet. Der Kleiderbügel kann aus einer in sich geschlossenen Drahtschlaufe gebildet werden, die aus einer einzigen Drahtlänge gebogen ist. Daneben kann der Kleiderbügel auch aus zwei Teilen zusammengeschweißt werden, z.B. Überlappt-Verschweißen im Bereich der U-förmigen Umbiegungen.

Nach einer besonders bevorzugten Ausführungsform sind die inneren Enden des jeweils ersten und zweiten Drahtstückes der beiden Tragarme zur Bildung eines sogenannten Kragenbereichs etwas nach oben gebogen und durch ein gerades Drahtstück verbunden, so daß die beiden Drahtstücke über ihre gesamte Länge parallel zueinander verlaufen. Der Aufhängehaken ist dabei getrennt ausgebildet. Dadurch, daß die beiden Tragarme hierbei auf kürzestem Weg miteinander verbunden werden, ist dieser Kleiderbügel besonders stabil. Die Verbindung des Bügelkörpers mit dem Aufhängehaken erfolgt durch zwei flächig aneinanderliegende und miteinander verbundene Platten, wobei der Kragenbereich eines Drahtstückes in die eine Platte eingelassen ist, während die Befestigungsenden des Aufhängehakens in die andere Platte eingelassen sind. Beide Platten werden dann formschlüssig, z.B. durch eine Schwalbenschwanzverbindung, oder durch Verschweißen oder Verkleben miteinander verbunden.

Zusätzlich kann in eine der beiden Platten noch ein nach unten vorstehender Krawattenhaltebügel eingelassen sein.

Zwischen die beiden parallel verlaufenden Drahtstücke jedes Tragarms können an den seitlichen Enden jedes Tragarms Einlegestücke eingesetzt werden. Um das Federn des nachgiebigen Sicherungselements nicht zu beeinträchtigen, sind die Einlegestücke dabei auf die seitlichen Enden der Tragarme beschränkt. Mittels dieser Einlegestücke kann ein waagrechter Hosensteg vorgesehen werden, wobei die seitlichen Enden des Hosenstegs in den Einlegestücken festgelegt sind. Selbstverständlich kann der Hosensteg auch auf andere Weise an den seitlichen Enden der Tragarme, z.B. durch Schweißen, festgemacht werden.

Zum Aufhängen und Abnehmen des Kleiderbügels wird dieser an einem der Tragarme gehalten. Es werden dabei zwangsläufig die beiden parallel verlaufenden Drahtstücke zusammengedrückt. Dadurch wird auch das nachgiebige Sicherungselement, das innerhalb des Aufhängehakens liegt, so verlagert, daß die Öffnung des Aufhängehakens freiliegt. Ist der Aufhängehaken an dem Haltegriff eingehängt und wird der Tragarm losgelassen, so nimmt das nachgiebige Sicherungselement wieder seine ursprüngliche Lage ein, in der es die Öffnung des Aufhängehakens so weit schließt, daß der Kleiderbügel sich nicht von dem Haltegriff lösen kann.

Der Kleiderbügel kann aus Holz, Kunststoff oder Metall hergestellt sein und ist zweckmäßig aus einem Alu- oder Stahldraht von 4 bis 6 mm Stärke gebogen.

Ausführungsbeispiele der Erfindung werden nachfolgend anhand der Zeichnung erläutert. Es zeigen:
- Fig. 1: ein erstes Ausführungsbeispiel des Kleiderbügels in einer Ansicht von schräg oben;
- Fig. 2: den Kleiderbügel von Fig. 1, eingehängt an einem Haltegriff von vorne;
- Fig. 3: einen Schnitt nach 3-3 von Fig. 2;
- Fig. 4: den Kleiderbügel von Fig. 1 von oben;
- Fig. 5: ein zweites Ausführungsbeispiel des Kleiderbügels und
- Fig. 6: den Kleiderbügel von Fig. 5 mit auseinandergenommenem Mittelstück.

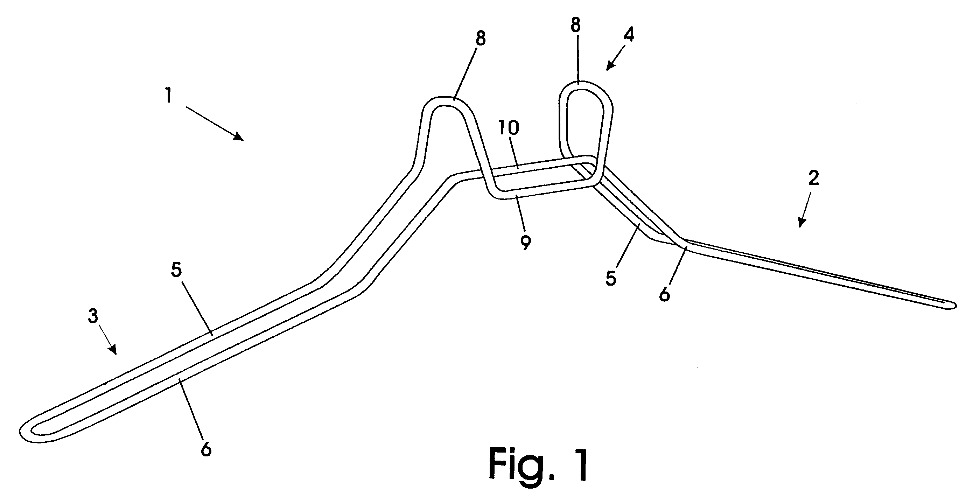

Bei dem Ausführungsbeispiel der Fig. 1 bis 4 ist der Kleiderbügel aus einem Metalldraht geformt, der einen geschlossenen Weg beschreibt. Der Kleiderbügel weist einen Bügelkörper 1 mit zwei Tragarmen 2, 3 sowie einen Aufhängehaken 4 auf.

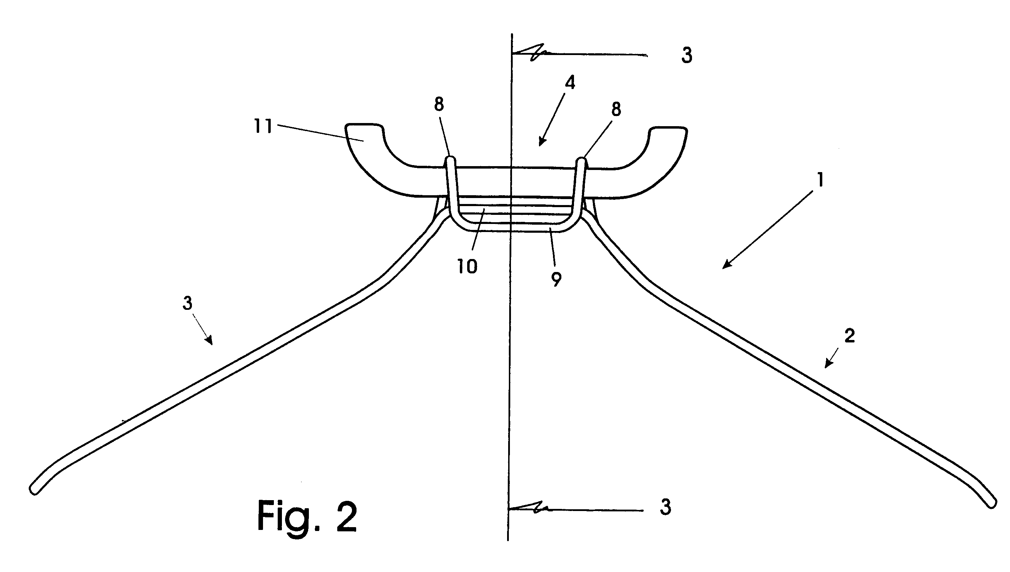

Die beiden Tragarme 2, 3 sind durch zwei in einem Abstand von 1 bis 2 cm parallel verlaufende erste und zweite Drahtstücke 5, 6 gebildet, die an ihren äußeren Enden durch eine U-förmige Umbiegung 7 miteinander verbunden sind. Wie in Fig. 2 erkennbar, fallen die Tragarme 2, 3 nach außen ab und sind sie geknickt, so daß der Neigungswinkel zum inneren Ende der Tragarme 2, 3 hin größer wird, wodurch ein Kragenbereich gebildet wird.

An den inneren Enden der ersten Drahtstücke 5 sind jeweils Hakenelemente 8 angeformt, die im wesentlichen in einer Ebene liegen, die normal zur Längserstreckung des Bügelkörpers 1 also zur Verbindungslinie der beiden Umbiegungen 7 an den äußeren Enden der Tragarme 2, 3 liegt. Die freien Enden der beiden Hakenelemente 8 sind durch ein parallel zur Längserstreckung des Bügelkörpers 1 liegendes Verbindungselement 9 miteinander verbunden, so daß die beiden Hakenelemente 8 und das Verbindungselement 9 zusammen den Aufhängehaken 4 bilden. Die Hakenelemente 8 verlaufen von den Enden der ersten Drahtstücke 5 zunächst nach oben und dann in einem halbkreisförmigen Bogen, so daß die freien Enden der hakenförmigen Elemente 8 wieder nach unten zeigen. Der halbkreisförmige Bogen ist dabei zu den zweiten Drahtstücken 6 der beiden Tragarme 2, 3 hin gerichtet.

Die inneren Enden der zweiten Drahtstücke 6 sind durch ein weiteres Drahtstück 12 ebenfalls miteinander verbunden. Dieses weitere Drahtstück 12 sichert in Verbindung mit dem Aufhängehaken 4 den Kleiderbügel gegen ein unbeabsichtigtes Lösen von dem Haltegriff 11 und bildet daher ein Sicherungselement 10.

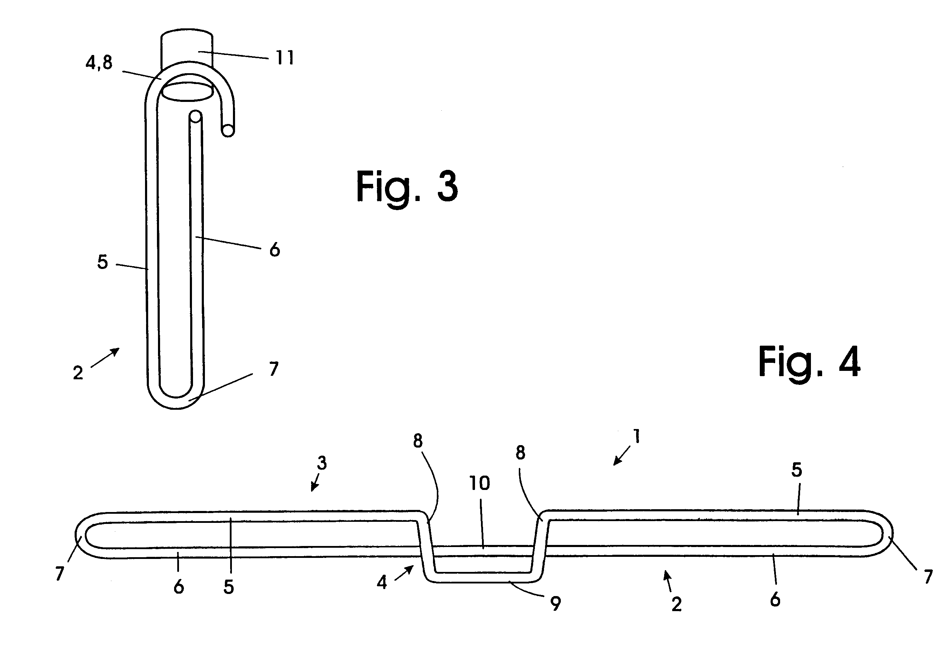

Wie man insbesondere aus Fig. 3 erkennt, befindet sich das Sicherungselement 10 etwa in der Mitte der durch den Aufhängehaken 4 umgriffenen Fläche oder ist etwas zu dem Verbindungselement 9 hin versetzt und ist das Ende des Aufhängehakens 4, d.h. das Verbindungselement 9, soweit nach unten gezogen, daß es tiefer liegt als das Sicherungselement 10. Aus Fig. 3 erkennt man dabei ferner, daß sich der Kleiderbügel nicht unbeabsichtigt von dem Haltegriff 11 lösen kann, da bereits nach einer geringfügigen Anhebung des Kleiderbügels das Sicherungselement 10 gegen die Unterseite des Haltegriffes 11 stößt. Ein Abnehmen des Kleiderbügels von dem Haltegriff 11 ist nur möglich, wenn zuvor die beiden Drahtstücke 5, 6 eines der beiden Tragarme 2, 3 gegeneinander gedrückt werden, was mehr oder weniger zwangsläufig erfolgt, wenn einer der beiden Tragarme 2, 3 mit der Hand erfaßt wird. Nach Verschwenken im Gegenuhrzeigersinn, in Fig. 3 gesehen, um etwa 30° kann der Kleiderbügel dann von dem Haltegriff 11 abgenommen werden. Das Verschwenken erfolgt dabei so, daß der Aufhängehaken 4 etwas ins Wageninnere zeigt, während die Umbiegungen 7 an den Enden der Tragarme 2, 3 etwas zu dem Fahrzeugfenster hin zeigen.

Zum Einhängen des Kleiderbügels an dem Haltegriff 11 ist der Bewegungsablauf umgekehrt: In einer Ausrichtung, in der der Kleiderbügel mit seinem oberen Ende, d.h. mit dem Aufhängehaken 4, etwa unter einem Winkel von 30° ins Fahrzeuginnere zeigt, wird das freie Ende des Aufhängehakens 4, d.h. das Verbindungselement 9, über den Haltegriff 11 bewegt und dann nach unten gezogen, wobei das Sicherungselement 10 beim Loslassen des Tragarms 2, 3 wieder seine Normalstellung einnimmt (Fig. 3).

Zwischen den Punkten, an denen die Hakenelemente 8 von den ersten Drahtstücken 5 abgewinkelt sind, besteht ein freier Bereich. Dieser kann durch ein Leder- oder Stoffband überbrückt werden, wobei auf dem Leder- oder Stoffband Aufdrucke angebracht werden können, z.B. die Automarke. In dem Leder- oder Stoffband kann auch ein Tasche zur Aufnahme einer flachen, zusammenfaltbaren Kleiderbürste vorgesehen sein.

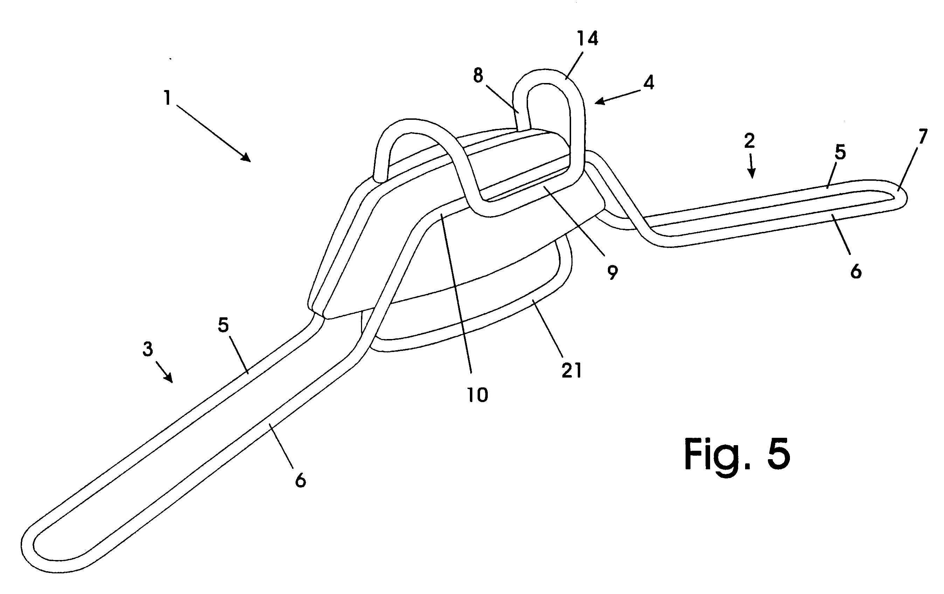

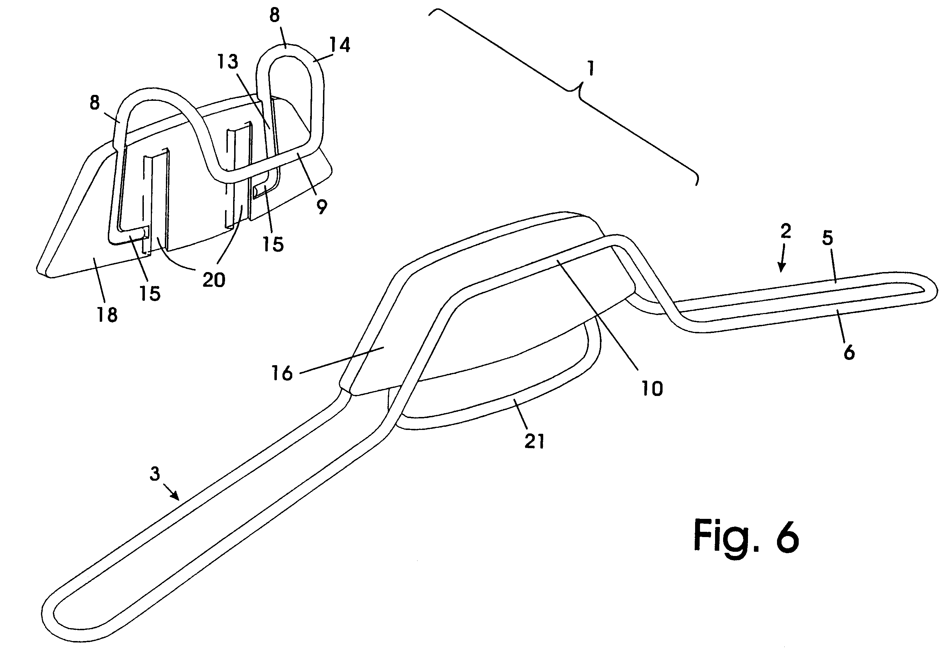

Bei dem Ausführungsbeispiel der Fig. 5 und 6 ist der Kleiderbügel ebenfalls aus Metalldraht geformt, der Bügelkörper 1 und der Aufhängehaken 4 bestehen jedoch aus getrennten Drahtelementen.

Der Bügelkörper 1 weist wiederum zwei Tragarme 2, 3 auf, die durch zwei in einem Abstand von 1 bis 2 cm parallel verlaufende erste und zweite Drahtstücke 5, 6 gebildet sind, die an ihren äußeren Enden durch eine Umbiegung 7 miteinander verbunden sind. Im Kragenbereich ist der Neigungswinkel der beiden Tragarme 2, 3 wiederum größer. Die inneren Enden beider Drahtstücke 5, 6 sind durch Drahtstücke 12 miteinander verbunden, die ebenfalls parallel zueinander liegen. Insgesamt wird der Bügelkörper damit aus zwei parallel verlaufenden Drahtelementen gebildet.

Der Aufhängehaken 4 wird wiederum durch zwei Hakenelemente 8 und ein Verbindungselement 9 gebildet. Jedes Hakenelement 8 hat einen geraden Schaft 13, an dessen obere Ende sich ein etwa halbkreisförmiger Hakenbereich 14 anschließt. Die unteren Enden 15 der schäfte 13 sind zueinander hin abgewinkelt.

Die Verbindung des Bügelkörpers 1 und des Aufhängehakens 4 erfolgt dadurch, daß sie in Kunststoffplatten 16, 18 verankert sind, die miteinander zu einem Mittelstück verbunden sind. In Fig. 6 sind die beiden Platten 16, 18 vor ihrer Verbindung gezeigt. In der Platte 18 werden die beiden Schäfte 13 mit den abgewinkelten Enden 15 in Rillen 19 aufgenommen. In ähnlicher Weise werden die stärker geneigten inneren Enden der ersten Drahtstücke 5 und das sie verbindende Drahtstück 12 in einer entsprechend geformten Rille der Platte 16 aufgenommen, wobei diese Rille in Fig. 6 nicht dargestellt ist. Von der Platte 16 kann dabei noch ein Krawattenbügel 21 nach unten vorstehen. Die beiden Platten 16, 18 haben gleiche Abmessungen und haben etwa eine Trapezform, die den gesamten Kragenbereich des einen Drahtelements aufnimmt. Mittels einer Schwalbenschwanzverbindung 20 werden die beiden Platten 16, 18 zusammengefügt, so daß die beiden Platten 16, 18 jeweils mit der Seite, in der sich die Rillen befinden, aneinander liegen. Von der Schwalbenschwanzverbindung 20 sind nur die in der Platte 18 vorgesehenen trapezförmigen Nuten in Fig. 6 dargestellt, während die entsprechenden trapezförmigen Rippen sich auf der in Fig. 6 nicht erkennbaren Seite der Platte 16 befinden.

Die etwa halbkreisförmig gebogenen Bereiche 14 der Hakenelemente 8 sind zweckmäßig mit einem weichen, rutschhemmenden Kunststoffüberzug versehen, wodurch sowohl ein Verrutschen auf dem Haltegriff 11 als auch ein Hin- und Herschaukeln gedämpft werden.

Wird der Kleiderbügel aus Kunststoff spritzgegossen oder aus Holz hergestellt, so können die Tragarme aus Vollmaterial hergestellt sein, wobei jeder Tragarm zum inneren Ende hin gegabelt ist. Die jeweils ersten und zweiten Zinken können dann miteinander verbunden sein und an der Verbindungsstelle der ersten Zinken kann der Aufhängehaken entweder wie bei der dargestellten Ausführungsform in zwei beabstandeten Hakenelementen oder in Vollmaterial entsprechender Breite ausgebildet sein. Das Verbindungsstuck der jeweils zweiten Zinken bildet dann wiederum das nachgiebige Sicherungselement. Durch die Gabelung der Tragarme wird eine Vergrößerung der Öffnung des Aufhängehakens erreicht, wenn der Tragarm zum Einhängen oder Aushängen des Kleiderbügels an dem Haltegriff im Bereich der Gabelung erfaßt wird und dabei zwangsläufig die beiden Zinken gegeneinander gedrückt werden.

## Patentansprüche

1. Kleiderbügel, insbesondere zum Aufhängen von Kleidungsstücken an den Haltegriffen im Innenraum eines PKW, mit einem Bügelkörper (1), der zwei Tragarme (2, 3) aufweist, mit einem Aufhängehaken (4) zwischen den Tragarmen (2, 3), und mit einem nachgiebigen Sicherungselement (10), das sich in der Öffnung des Aufhängehakens (4) befindet, so daß es die Öffnung des Aufhängehakens (4) verkleinert, und das entgegen einer Federkraft so verlagerbar ist, daß es die Öffnung des Aufhängehakens (4) freigibt, dadurch gekennzeichnet,
- daß die beiden Tragarme (2, 3) jeweils aus im Abstand parallel zueinander verlaufenden ersten (5) und zweiten (6) Drahtstücken gebildet sind, wobei die äußeren Enden der ersten und zweiten Drahtstücke (5, 6) miteinander verbunden sind,
- daß an den inneren Enden des jeweils ersten Drahtstückes (5) der Aufhängehaken (4) angeordnet ist und
- daß das nachgiebige Sicherungselement (10) durch ein weiteres Drahtstück gebildet wird, das die inneren Enden der jeweils zweiten Drahtstücke (6) miteinander verbindet.

2. Kleiderbügel, nach Anspruch 1, dadurch gekennzeichnet,
- daß der Aufhängehaken (8) eine Breite von ca. 6 cm hat.

3. Kleiderbügel, nach Anspruch 1 oder 2, dadurch gekennzeichnet,
- daß der Aufhängehaken (4) als Doppelhaken aus zwei Hakenelementen (8) ausgebildet ist, deren freien Enden durch ein Verbindungselement (9) verbunden sind.

4. Kleiderbügel nach Anspruch 3, dadurch gekennzeichnet,
- daß der Kleiderbügel aus Draht gebogen ist und
- daß an den inneren Enden des jeweils ersten Drahtstückes (5) eines der beiden Hakenelemente (8) angeformt ist.

5. Kleiderbügel nach einem der Ansprüche 1 bis 3, dadurch gekennzeichnet,
- daß der Kleiderbügel aus Draht gebogen ist und
- daß der Aufhängehaken (4, 8) und die inneren Enden der ersten Drahtstücke (5) in einem Mittelstück (16, 18) gehalten sind.

## Claims

1. Clothes hanger, in particular for hanging articles of clothing from the grab handles inside a passenger car, with a hanger member (1) which has two carrier arms (2, 3), with a suspension hook (4) between the carrier arms (2, 3), and with a flexible securing element (10) which is located in the opening of the suspension hook (4) so that it reduces the opening of the suspension hook (4) and which can be displaced against a spring force so that it frees the opening of the suspension hook (4), characterized in that
- the two carrier arms (2, 3) each consist of first (5) and second (6) wire pieces running parallel to each other at a distance, the outer ends of the first and second wire pieces (5, 6) being connected to each other,
- the suspension hook (4) is disposed at the inner ends of the respective first (5) wire piece and
- the flexible securing element (10) is formed by a further wire piece which connects the inner ends of the respective second wire pieces (6) to each other.

2. Clothes hanger, according to claim 1 , characterized in that
- the suspension hook (8) has a width of ca. 6 cm.

3. Clothes hanger, according to claim 1 or 2, characterized in that
- the suspension hook (4) is designed as a double hook consisting of two hook elements (8), the free ends of which are connected by a connection element (9).

4. Clothes hanger according to claim 3, characterized in that
- the clothes hanger is bent from wire and
- one of the two hook elements (8) is formed at the inner ends of the respective first wire piece (5).

5. Clothes hanger according to one of claims 1 to 3, characterized in that
- the clothes hanger is bent from wire and
- the suspension hook (4, 8) and the inner ends of the first wire pieces (5) are held in a middle piece (16, 18).

## Revendications

1. Cintre, notamment pour suspendre des articles de vêtement aux poignées de maintien situées dans l'habitacle d'un véhicule de tourisme, qui comprend un corps de cintre (1) comportant deux bras de support (2, 3), un crochet de suspension (4) situé entre les bras de support (2, 3) et un élément flexible de sécurité (10) qui se trouve dans l'ouverture du crochet de suspension (4) de façon à rendre plus petite l'ouverture du crochet de suspension (4) et qui est déplaçable à l'encontre d'une force élastique de façon à libérer l'ouverture du crochet de suspension (4), caractérisé :
- en ce que chacun des deux bras de support (2, 3) est formé d'un premier (5) et un second (6) tronçons de fil s'étendant à distance parallèlement l'un à l'autre, les extrémités extérieures des premier et second tronçons de fil (5, 6) étant reliées l'une à l'autre,
- en ce que le crochet de suspension (4) est disposé à l'endroit des extrémités intérieures des premiers tronçons de fil (5) respectifs et
- en ce que l'élément flexible de sécurité (10) est formé au moyen d'un autre tronçon de fil qui relie l'une à l'autre les extrémités intérieures des seconds tronçons de fil (6) respectifs.

2. Cintre suivant la revendication 1, caractérisé :
- en ce que le crochet de suspension (8) a une largeur d'environ 6 cm.

3. Cintre suivant la revendication 1 ou 2, caractérisé :
- en ce que le crochet de suspension (4) est réalisé sous forme d'un double crochet constitué de deux éléments de crochet (8) dont les extrémités libres sont reliées au moyen d'un élément de liaison (9).

4. Cintre suivant la revendication 3, caractérisé
- en ce que le cintre est plié à partir de fil et
- en ce que les deux éléments de crochet (8) sont réalisés au formage chacun respectivement sur l'extrémité intérieure d'un premier tronçon de fil (5) correspondant.

5. Cintre suivant l'une des revendications 1 à 3, caractérisé :
- en ce que le cintre est plié à partir de fil et
- en ce que le crochet de suspension (4, 8) et les extrémités intérieures des premiers tronçons de fil (5) sont maintenues dans une pièce centrale (16, 18).
